(19) Europäisches Patentamt
European Patent Office
Office européen des brevets

(11) **EP 4 629 316 A1**

(12) **EUROPEAN PATENT APPLICATION**
published in accordance with Art. 153(4) EPC

(43) Date of publication:
**08.10.2025 Bulletin 2025/41**

(21) Application number: **24855917.1**

(22) Date of filing: **04.11.2024**

(51) International Patent Classification (IPC):
***H01M 4/131*** (2010.01)

(52) Cooperative Patent Classification (CPC):
**H01M 4/04; H01M 4/131; H01M 4/136;
H01M 4/1391; H01M 4/1397; H01M 4/36;
H01M 4/62; H01M 10/0525;** Y02E 60/10

(86) International application number:
**PCT/CN2024/129561**

(87) International publication number:
**WO 2025/040198 (27.02.2025 Gazette 2025/09)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **29.12.2023  CN 202311869745**

(71) Applicant: **Eve Power Co., Ltd.
Jingmen, Hubei 448000 (CN)**

(72) Inventors:
• **HUANG, Xin
 Jingmen, Hubei 448000 (CN)**

• **YI, Jingyu
 Jingmen, Hubei 448000 (CN)**
• **YANG, Jie
 Jingmen, Hubei 448000 (CN)**
• **WEI, Haitao
 Jingmen, Hubei 448000 (CN)**
• **TAN, Mingsheng
 Jingmen, Hubei 448000 (CN)**
• **YUAN, Dingding
 Jingmen, Hubei 448000 (CN)**

(74) Representative: **Berggren Oy
P.O. Box 16
Eteläinen Rautatiekatu 10A
00101 Helsinki (FI)**

(54) **POSITIVE ELECTRODE SHEET, AND PREPARATION METHOD THEREFOR AND USE THEREOF**

(57) A positive electrode sheet, a method for preparing the positive electrode sheet, and an application of the positive electrode sheet are provided in this application. The positive electrode sheet includes a positive electrode current collector and a composite positive electrode active material layer arranged on at least one side surface of the positive electrode current collector; the composite positive electrode active material layer includes a first positive electrode active material layer and a second positive electrode active material layer stacked in sequence, and the second positive electrode active material layer is arranged on a side, away from the positive electrode current collector, of the first positive electrode active material layer; a material of the first positive electrode active material layer comprises a positive electrode material with a layered structure, and a first conductive agent; and a material of the second positive electrode active material layer comprises a positive electrode material with an olivine structure, a second conductive agent, and a pore forming agent. In this application, structure and composition of the positive electrode sheet are adjusted to not only offer good peeling force and cycle stability, but also facilitate the transfer of electrons from a current collector to the positive electrode active material layer and increase the migration rate of lithium-ions, avoiding rapid material failure and high internal resistance.

Figure 1

**Description**

This application claims the priority to Chinese Patent Application No. 2023118697457, filed on December 29, 2023, to the China National Intellectual Property Administration, the contents of which are incorporated by reference herein.

TECHNICAL FIELD

This application is related to the field of positive electrode material technology, and in particular to a positive electrode sheet, a method for preparing the positive electrode sheet, and an application of the positive electrode sheet.

BACKGROUND

Due to the advantages of high energy density, low cost, and environmental friendliness, rich nickel layered transition metal oxides are considered highly promising candidate materials for positive electrodes in constructing next-generation lithium-ion batteries to meet the needs of electric vehicles. However, there are still some shortcomings in rate performance, structural stability, and safety, which hinder the practical application of this technology. Compared with rich nickel layered transition metal oxide positive electrode materials, positive electrode materials with olivine structure, such as lithium manganese iron phosphate (LMFP) and lithium iron phosphate (LFP), is better in safety performance and stability, and therefore have broad application prospects in the field of power batteries.

Compared with LFP materials, LMFP materials have the advantages of higher voltage, higher energy density, and better low-temperature performance. However, on the one hand, due to the dual voltage platform thereof, it is adverse to the control of a battery management system; and on the other hand, the constant current of LMFP is relatively low (about 85%), which is adverse to improving its fast-charging performance, thereby restricting the further application of LMFP in the field of power batteries. In order to address the above shortcomings, in the existing technology, a method of mixing lithium iron phosphate materials with ternary positive electrode materials has been disclosed.

However, after simple mixing of lithium iron phosphate materials with ternary positive electrode materials, due to a stronger conductivity of ternary positive electrode materials, current is more likely to pass through the ternary positive electrode materials during battery charging and discharging. Compared with lithium iron phosphate materials, ternary positive electrode materials are subjected to a larger current during actual charging and discharging, which leads to rapid failure of ternary positive electrode materials during battery charging and discharging cycles, resulting in a sharp increase in DC resistance and cyclic failure of the battery during charging and discharging cycles.

TECHNICAL PROBLEM

In this field, there is an urgent need to develop a composite positive electrode to address the above-mentioned shortcomings.

A positive electrode sheet, a method for preparing the positive electrode sheet, and an application of the positive electrode sheet are provided in this application. In this application, structure and composition of the positive electrode sheet are adjusted to not only offer good peeling force and cycle stability, but also facilitate the transfer of electrons from a current collector to a positive electrode active material layer and increase the migration rate of lithium-ions, avoiding rapid material failure and high internal resistance.

TECHNICAL SOLUTION

According to a first aspect, the present application provides a positive electrode sheet including a positive electrode current collector and a composite positive electrode active material layer arranged on at least one side surface of the positive electrode current collector.

The composite positive electrode active material layer includes a first positive electrode active material layer and a second positive electrode active material layer stacked in sequence, and the second positive electrode active material layer is arranged on a side, away from the positive electrode current collector, of the first positive electrode active material layer.

A material of the first positive electrode active material layer includes a positive electrode material with a layered structure, and a first conductive agent.

A material of the second positive electrode active material layer includes a positive electrode material with an olivine structure, a second conductive agent, and a pore forming agent.

According to a second aspect, the present application provides a method for preparing the positive electrode sheet according to the first aspect, including the following steps:

providing a positive electrode current collector;
forming a first positive electrode active material layer on at least one side surface of the positive electrode current collector; and
forming a second positive electrode active material layer on a surface of the first positive electrode active material layer;
wherein a material of the first positive electrode active material layer includes a positive electrode material with a layered structure, and a first conductive agent; a material of the second positive electrode active material layer includes a positive electrode material with an olivine structure, a second conductive agent, and a pore forming agent.

According to a third aspect, the present application provides a lithium-ion battery including:

a positive electrode sheet, wherein the positive electrode sheet is a positive electrode sheet according to the first aspect, or the positive electrode sheet is a positive electrode sheet prepared by the method according to the second aspect;
a negative electrode sheet; and
a separator arranged between the positive electrode sheet and the negative electrode sheet.

According to a fourth aspect, the present application provides an electronic device including a lithium-ion battery according to the third aspect.

BENEFICIAL EFFECTS

Compared to related technologies, this application has the following beneficial effects:

The present application provides a positive electrode sheet, in which a positive electrode material with a layered structure is arranged on a side close to a positive electrode current collector, which is conducive to increasing a peeling force of the electrode sheet and thereby enhancing the stability of the electrode sheet during cycles by. In addition, the positive electrode material with a layered structure is good in conductivity. The positive electrode material with a layered structure is arranged on a side close to the current collector, which is conducive to the transfer of electrons from the current collector to a positive electrode active material layer. Meanwhile, a pore forming agent is added to a positive electrode material with an olivine structure to form a microporous structure in the positive electrode material layer with an olivine structure, increasing the migration rate of lithium-ions in the positive electrode active material layer. Furthermore, a mass fraction of a second conductive agent in a material of a second positive electrode active material layer can be selected to be higher than a mass fraction of a first conductive agent in a material of a first positive electrode active material layer, which is beneficial for enhancing the rate performance of the battery.

After having read and understood the accompanying drawings and detailed description, other aspects can be understood.

BRIEF DESCRIPTION OF THE DRAWINGS

Figure 1 is a schematic diagram of a structure of a positive electrode sheet according to Application Example 1;
Figure 2 is a DC resistance diagram of a battery according to Application Example 1 at different numbers of cycles;

Figure 3 is a DC resistance diagram of a battery according to Comparative Application Example 1 at different numbers of cycles;
Figure 4 is a DC resistance diagram of a battery according to Comparative Application Example 3 at different numbers of cycles;
Figure 5 is a fast-charging cycle performance diagram of batteries according to Application Example 1, Application Example 2, and Comparative Application Example 1;

In the drawings: 10, positive electrode current collector; 20, composite positive electrode active material layer; 201, first positive electrode active material layer; 202, second positive electrode active material layer; 20, the composite positive electrode active material layer including 201, first positive electrode active material layer and 202, second positive electrode active material layer stacked in sequence.

DETAILED DESCRIPTION OF THE PREFERRED EMBODIMENTS

According to a first aspect, the present application provides a positive electrode sheet including a positive electrode current collector and a composite positive electrode active material layer arranged on at least one side surface of the positive electrode current collector.

The composite positive electrode active material layer includes a first positive electrode active material layer and a second positive electrode active material layer stacked in sequence, the second positive electrode active material layer is arranged on a side, away from the positive electrode current collector, of the first positive electrode active material layer.

A material of the first positive electrode active material layer includes a positive electrode material with a layered structure, and a first conductive agent.

A material of the second positive electrode active material layer includes a positive electrode material with an olivine structure, a second conductive agent, and a pore forming agent.

In the present application, a positive electrode material with a layered structure is arranged on a side close to the positive electrode current collector, which is beneficial to increase the peeling force of the electrode sheet and improve the cycle stability of the electrode sheet. Further, the positive electrode material with a layered structure is good in conductivity. The positive electrode material with a layered structure is arranged on a side close to the current collector, which is conducive to the transfer of electrons from the current collector to the positive electrode active material layer. Meanwhile, a pore forming agent is added to a positive electrode material layer with an olivine structure to form a microporous structure in the positive electrode material layer with an olivine structure, increasing the migration rate of lithium-ions in the positive electrode active material layer, and enhancing the rate performance of the battery.

Optionally, the positive electrode material with a layered structure includes a ternary positive electrode material.

Optionally, the ternary positive electrode material includes a single-crystal ternary positive electrode material.

In this application, the single-crystal ternary positive electrode material is good in overcharge resistance performance, which is beneficial for a long-term cyclic charging and discharging of the battery, thereby extending the service life of the battery.

Optionally, the first conductive agent includes any one or a combination of at least two of carbon nanotubes, Super P, and acetylene black.

Optionally, the positive electrode material with an olivine structure includes lithium manganese iron phosphate material.

Optionally, the lithium manganese iron phosphate material includes a lithium manganese iron phosphate material with a core-shell structure.

In this application, compared to ordinary lithium manganese iron phosphate materials, manganese ion leaching of lithium manganese iron phosphate with a core-shell coating structure is inhibited, resulting in better stability and cycling performance.

In some embodiments, the lithium manganese iron phosphate material with a core-shell structure can be, for example, lithium manganese iron phosphate (as the core) coated with a carbon layer (the carbon layer is used as the shell layer), or lithium manganese iron phosphate coated with a metal oxide layer or a metal nitride layer.

Optionally, the second conductive agent includes any one or a combination of at least two of carbon nanotubes, Super P, and acetylene black.

Optionally, the pore forming agent includes vapor grown carbon fibres.

In this application, vapor grown carbon fibres are selected as the pore forming agent, which can form a uniform and favourable microporous structure for insertion and extraction of lithium-ions in the positive electrode.

Optionally, based on a total mass of the second positive electrode active material layer being 100%, a mass fraction of the pore forming agent is 0.2% to 1.2%, optionally 0.2% to 0.5%, such as 0.2%, 0.3%, 0.4%, 0.5%, 0.8%, 1%, 1.2%, etc.

In this application, in case that the mass fraction of the pore forming agent is controlled within an optional range of 0.2% to 1.2%, size of the micropores formed in the second positive electrode active material layer is moderate. Therefore, the microporous structure formed above is conducive to a repeated insertion and extraction of lithium-ions and can ensure the structural stability of the positive electrode active layer.

Optionally, a mass ratio of the positive electrode material with a layered structure to the positive electrode material with an olivine structure is 1:(1-4), optionally 1:1.5, such as 1:1, 1:1.2, 1:1.3, 1:1.4, 1:1.42, 1:1.45, 1:48, 1:5, 1:52, 1:55, 1:58, 1:1.6, 1:2, 1:3, 1:4, etc.

In this application, the mass ratio of the positive electrode material with a layered structure to the positive electrode material with an olivine structure can be adjusted, so that it is possible to solve the shortcomings of the dual voltage platforms of the positive electrode material with an olivine structure while ensuring the safety performance of the battery.

Optionally, a mass fraction of the second conductive agent in the material of the second positive electrode active material layer is greater than a mass fraction of the first conductive agent in the material of the first positive electrode active material layer.

In this application, due to a stronger conductivity of the positive electrode material with a layered structure compared to the positive electrode material with an olivine structure, a higher content of the second conductive agent is added to the material of the second positive electrode active material layer, which is beneficial for improving the conductivity of the second positive electrode active material layer. Therefore, the positive electrode material with a layered structure and the positive electrode material with an olivine structure have similar current transmission capabilities during battery charging and discharging cycles, avoiding rapid failure of the positive electrode material with a layered structure and thus extending the service life of the battery.

Optionally, a mass fraction of the first conductive agent in the material of the first positive electrode active material layer is 0.7% to 1.9%, such as 0.7%, 0.8%, 1%, 1.2%, 1.4%, 1.6%, 1.9%, etc.

Optionally, a mass fraction of the second conductive agent in the material of the second positive electrode active material layer is 0.8% to 2.0%, such as 0.8%, 0.9%, 1%, 1.2%, 1.4%, 1.5%, 1.8%, 2.0%, etc.

Optionally, the first positive electrode active material layer can further include a first binder, and the second positive electrode active material layer can further include a second binder.

Optionally, the first binder and the second binder each include polyvinylidene fluoride and/or sodium carboxymethyl cellulose.

Optionally, a mass fraction of the first binder in the material of the first positive electrode active material layer is 1.5% to 2.0%, such as 1.5%, 1.6%, 1.7%, 1.8%, 1.9%, 2.0%, etc.

Optionally, a mass fraction of the second binder in the material of the second positive electrode active material layer is 1.5% to 2.0%, such as 1.5%, 1.6%, 1.7%, 1.8%, 1.9%, 2.0%, etc.

In this application, for example, the current collector includes an aluminium foil or a carbon coated aluminium foil.

According to a second aspect, the present application provides a method for preparing a positive electrode sheet according to the first aspect, including the following steps:

providing a positive electrode current collector;

forming a first positive electrode active material layer on at least one side surface of the positive electrode current collector; and

forming a second positive electrode active material layer on a surface of the first positive electrode active material layer;

wherein a material of the first positive electrode active material layer includes a positive electrode material with a layered structure, and a first conductive agent; a material of the second positive electrode active material layer includes a positive electrode material with an olivine structure, a second conductive agent, and a pore forming agent.

Optionally, a method for preparing the first positive electrode active material layer and the second positive electrode active material layer includes double-layer coating.

In this application, the process of double-layer coating includes simultaneously coating at least one side of the current collector with a double-layer coating die to form a first positive electrode active material layer and a second positive electrode active material layer.

According to a third aspect, the present application provides a lithium-ion battery including:

a positive electrode sheet, the positive electrode sheet being a positive electrode sheet according to the first aspect, or the positive electrode sheet being a positive electrode sheet prepared by the method according to the second aspect;

a negative electrode sheet; and

a separator arranged between the positive electrode sheet and the negative electrode sheet.

According to a fourth aspect, the present application provides an electronic device including a lithium-ion battery according to the third aspect. In some embodiments, the electronic device can be a new energy vehicle.

The technical solution of the present application will be further explained by combining the accompanying drawings and specific implementation methods. Persons skilled in the art should understand that the embodiments described are only intended to assist in understanding the present application and should not be considered as specific limitations on the present application.

Embodiment 1

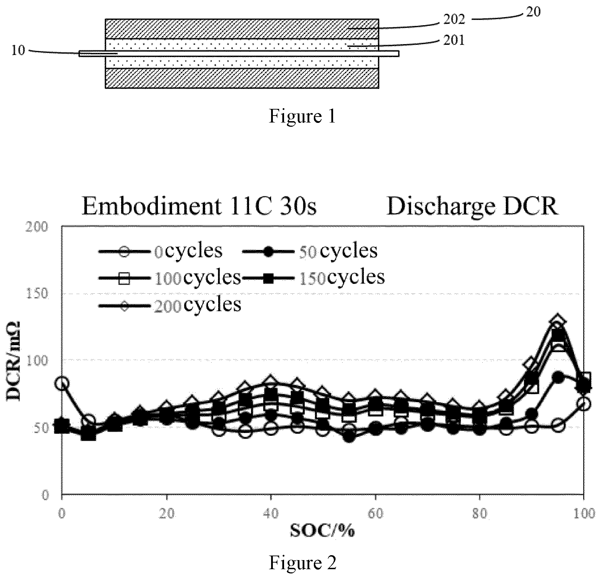

This embodiment provides a positive electrode sheet. As shown in Figure 1, the positive electrode sheet includes an aluminium foil with a thickness of 12 microns and composite positive electrode active material layers arranged on both side surfaces of the aluminium foil.

The composite positive electrode active material layers include a first positive electrode active material layer and a second positive electrode active material layer stacked in sequence, and the second positive electrode active material layer is arranged on a side, away from the aluminium foil, of the first positive electrode active material layer.

Based on a total mass of a material of the first positive electrode active material layer being 100%, the material of the first positive electrode active material layer includes a single-crystal $LiNi_{0.6}Co_{0.1}Mn_{0.3}O_2$ positive electrode material with a mass fraction of 97.40%, a Super P conductive agent with a mass fraction of 0.5%, a carbon nanotube conductive agent with a mass fraction of 0.4%, and a polyvinylidene fluoride with a mass fraction of 1.7%.

Based on a total mass of a material of the second positive electrode active material layer being 100%, the material of the second positive electrode active material layer includes lithium manganese iron phosphate positive electrode material coated with a carbon layer with a mass fraction of 97.40%, a Super P conductive agent with a mass fraction of 0.5%, a carbon nanotube conductive agent with a mass fraction of 0.5%, a vapor grown carbon fibre pore forming agent with a mass fraction of 0.3%, and a polyvinylidene fluoride with a mass fraction of 1.5%.

Among them, a mass ratio of the single-crystal $LiNi_{0.6}Co_{0.1}Mn_{0.3}O_2$ positive electrode material to the lithium manganese iron phosphate positive electrode material coated with a carbon layer is 3:7.

This embodiment further provides a method for preparing the above positive electrode sheet including the following steps:

providing an aluminium foil; and

simultaneously applying a first positive electrode active material layer and a second positive electrode active material layer on both side surfaces of the aluminium foil with a double-layer coating die.

Embodiment 2

A difference between this Embodiment and Embodiment 1 is that a non-double layer coating is used in the preparation method. Specifically, a first positive electrode active material layer is formed by coating, and then a second positive electrode active material layer is formed on a surface of the first positive electrode active material layer. All others are identical to those in Embodiment 1.

Embodiment 3

This Embodiment provides a positive electrode sheet, which includes an aluminium foil, and composite positive electrode active material layers arranged on both side surfaces of the aluminium foil.

The composite positive electrode active material layer includes a first positive electrode active material layer and a second positive electrode active material layer stacked in sequence, and the second positive electrode active material layer is arranged on a side, away from the aluminium foil, of the first positive electrode active material layer.

Based on a total mass of the material of the first positive electrode active material layer being 100%, the material of the first positive electrode active material layer includes a single-crystal $LiNi_{0.6}Co_{0.1}Mn_{0.3}O_2$ positive electrode material with a mass fraction of 97.40%, a Super P conductive agent with a mass fraction of 0.5%, a carbon nanotube conductive agent with a mass fraction of 0.6%, and a polyvinylidene fluoride with a mass fraction of 1.5%.

Based on a total mass of a material of the second positive electrode active material layer being 100%, the material of the second positive electrode active material layer includes a lithium manganese iron phosphate positive electrode material coated with a carbon layer with a mass fraction of 97.2%, a Super P conductive agent with a mass fraction of 0.7%, a carbon nanotube conductive agent with a mass fraction of 0.7%, a vapor grown carbon fibre pore forming agent with a mass fraction of 0.3%, and a polyvinylidene fluoride with a mass fraction of 1.1%.

Among them, a mass ratio of the single-crystal $LiNi_{0.6}Co_{0.1}Mn_{0.3}O_2$ positive electrode material to the lithium manganese iron phosphate positive electrode material coated with a carbon layer is 1:1.5.

The method for preparing the positive electrode sheet in this Embodiment is the same as that in Embodiment 1.

Embodiment 4

A difference between this Embodiment and Embodiment 1 is that a mass ratio of the single-crystal $LiNi_{0.6}Co_{0.1}Mn_{0.3}O_2$ positive electrode material to the lithium manganese iron phosphate positive electrode material coated with a carbon layer is 1:0.5. All others are identical to Embodiment 1.

Embodiment 5

A difference between this Embodiment and Embodiment 1 is that a mass ratio of the single-crystal $LiNi_{0.6}Co_{0.1}Mn_{0.3}O_2$ positive electrode material to the lithium manganese iron phosphate positive electrode material coated with a carbon layer is 1:8. All others are identical to Embodiment 1.

Embodiment 6

A difference between this Embodiment and Embodiment 1 is that, based on a total mass of the material of the first positive electrode active material layer being 100%, the material of the first positive electrode active material layer includes a single-crystal $LiNi_{0.6}Co_{0.1}Mn_{0.3}O_2$ positive electrode material with a mass fraction of 97.40%, a Super P conductive agent with a mass fraction of 0.5%, a carbon nanotube conductive agent with a mass fraction of 0.5%, and a polyvinylidene fluoride with a mass fraction of 1.6%.

Based on a total mass of a material of the second positive electrode active material layer being 100%, the material of the second positive electrode active material layer includes a lithium manganese iron phosphate positive electrode material coated with a carbon layer with a mass fraction of 97.40%, a Super P conductive agent with a mass fraction of 0.3%, a carbon nanotube conductive agent with a mass fraction of 0.5%, a vaper grown carbon fibre pore forming agent with a mass fraction of 0.3%, and a polyvinylidene fluoride with a mass fraction of 1.7%. All others are identical to Embodiment 1.

Comparative Example 1

This Comparative Example is a positive electrode sheet, which includes an aluminium foil and composite positive electrode active material layers arranged on both side surfaces of the aluminium foil.

Based on a total mass of a material of the composite positive electrode active material layer being 100%, the material of the composite positive electrode active material layer includes a single-crystal $LiNi_{0.6}Co_{0.1}Mn_{0.3}O_2$ positive electrode material, a lithium manganese iron phosphate positive electrode material coated with a carbon layer, a Super P conductive agent of 0.5%, a carbon nanotube conductive agent of 0.5%, a vapor grown carbon fibre pore forming agent of 0.3%, and a polyvinylidene fluoride of 1.5%. A mass ratio of the $LiNi_{0.6}Co_{0.1}Mn_{0.3}O_2$ positive electrode material to the lithium manganese iron phosphate positive electrode material coated with a carbon layer is 3:7. All others are identical to Embodiment 1.

Comparative Example 2

This Comparative Example is a positive electrode sheet, which includes an aluminium foil and composite positive electrode active material layers arranged on both side surfaces of the aluminium foil.

The composite positive electrode active material layer includes a first positive electrode active material layer and a second positive electrode active material layer stacked in sequence, and the second positive electrode active material layer is arranged on a side, away from the aluminium foil, of the first positive electrode active material layer.

Based on a total mass of a material of the first positive electrode active material layer being 100%, the material of the first positive electrode active material layer includes a lithium manganese iron phosphate positive electrode material coated with a carbon layer of 97.2%, a Super P conductive agent of 0.5%, a carbon nanotube conductive agent of 0.5%, a vapor grown carbon fibre pore forming agent of 0.3%, and a polyvinylidene fluoride of 1.5%.

Based on a total mass of a material of the second positive electrode active material layer being 100%, the material of the second positive electrode active material layer includes a single-crystal Li-Ni$_{0.6}$Co$_{0.1}$Mn$_{0.3}$O$_2$ positive electrode material with a mass fraction of 97.40%, a Super P conductive agent with a mass fraction of 0.5%, a carbon nanotube conductive agent with a mass fraction of 0.4%, and a polyvinylidene fluoride with a mass fraction of 1.7%.

Among them, a mass ratio of the single-crystal LiNi$_{0.6}$Co$_{0.1}$Mn$_{0.3}$O$_2$ positive electrode material to the lithium manganese iron phosphate positive electrode material coated with a carbon layer is 3:7.

Comparative Example 3

This Comparative Example is a positive electrode sheet, which includes:

> an aluminium foil including a first surface and a second surface;
> a first positive electrode formed on the first surface, based on a total mass of the first positive electrode being 100%, a material of the first positive electrode includes a lithium manganese iron phosphate with a core-shell coating structure with a mass fraction of 97%, a dispersant (model YTF003, purchased from Shenzhen Teyi Company) with a mass fraction of 0.2%, a first conductive agent ( vapor grown carbon fibre, carbon nanotube, Super P, and acetylene black with mass fractions of 0.25%, 0.25%, 0.3%, and 0.3%, respectively), and a polyvinylidene fluoride binder with a mass fraction of 1.7%;
> a second positive electrode formed on the second surface, based on a total mass of the second positive electrode being 100%, a material of the second positive electrode includes a single-crystal Li-Ni$_{0.6}$Co$_{0.1}$Mn$_{0.3}$O$_2$ ternary positive electrode material with a mass fraction of 97.3%, a dispersant with a mass fraction of 0.2% (model YTF003, purchased from Shenzhen Teyi Company), a second conductive agent (mass fractions of vapor grown carbon fibre, carbon nanotube, Super P, and acetylene black are 0.1%, 0.1%, 0.3%, and 0.3%, respectively), and a polyvinylidene fluoride binder with a mass fraction of 1.7%.

Application Embodiments 1 to 6 and Comparative Application Examples 1 to 3

Lithium-ion batteries were prepared with the positive electrode sheets according to Embodiments 1 to 6 and Comparative Examples 1 to 3. The preparation method is as follows:

Preparation of a positive electrode sheet: the above-mentioned positive electrode sheet.

Preparation of a negative electrode sheet: a negative electrode active material graphite, a Super P conductive agent, a styrene butadiene rubber binder, and a carboxymethyl cellulose sodium thickener are mixed in a mass ratio of 96.7:0.6:1.5:1.2, deionized water is added and stirred thoroughly to make a uniform negative electrode slurry, which is coated on a copper foil with a thickness of 6 μm, dried and rolled to obtain the negative electrode sheet.

Preparation of a lithium-ion battery: the positive electrode sheet, a separator, and the negative electrode sheet are rolled in sequence to obtain a battery cell; the battery cell is encapsulated with an aluminium-plastic film, baked to remove water, and then injected with electrolyte; vacuum packaged, shelved, formed, post-packaged, and shaped to obtain a lithium-ion battery.

Test Conditions

The positive electrode sheets according to Embodiments 1 to 6 and Comparative Examples 1 to 3 are tested by the following method:
Peeling force: perform a test with a peel tester.

The lithium-ion batteries according to Application Embodiments 1 to 6 and Comparative Application Examples 1 to 3 will be tested by the following methods:

> (1) Cycle performance: charge and discharge the battery at 1C/1C, and record changes in capacity during each charge and discharge;
> (2) DC resistance: the battery undergoes a DC internal resistance test every 50 cycles. The test method involves discharging the battery at a specific SOC (0%, 5%, 10%, ..., 100% SOC) for 30 seconds at 1C. A voltage before discharge is recorded as V0, a voltage at the end of discharge is V1, and a current at the end of discharge is I. The DC internal resistance of the battery can be calculated according to the following formula:

$$R = (V0 - V1) / I$$

The test results are shown in Table 1:

Table 1

| | Peeling force/N |
|---|---|
| Embodiment 1 | 0.35 |
| Embodiment 2 | 0.37 |
| Embodiment 3 | 0.33 |
| Embodiment 4 | 0.33 |
| Embodiment 5 | 0.35 |
| Embodiment 6 | 0.32 |

(continued)

|  | Peeling force/N |
|---|---|
| Comparative Example 1 | 0.32 |
| Comparative Example 2 | 0.29 |
| Comparative Example 3 | 0.28 |

From Table 1, it can be seen that in this application, the positive electrode material with a layered structure is arranged on a side close to the positive electrode current collector, which is beneficial for increasing the peeling force of the electrode sheet and thereby enhancing the stability of the electrode sheet during cycles.

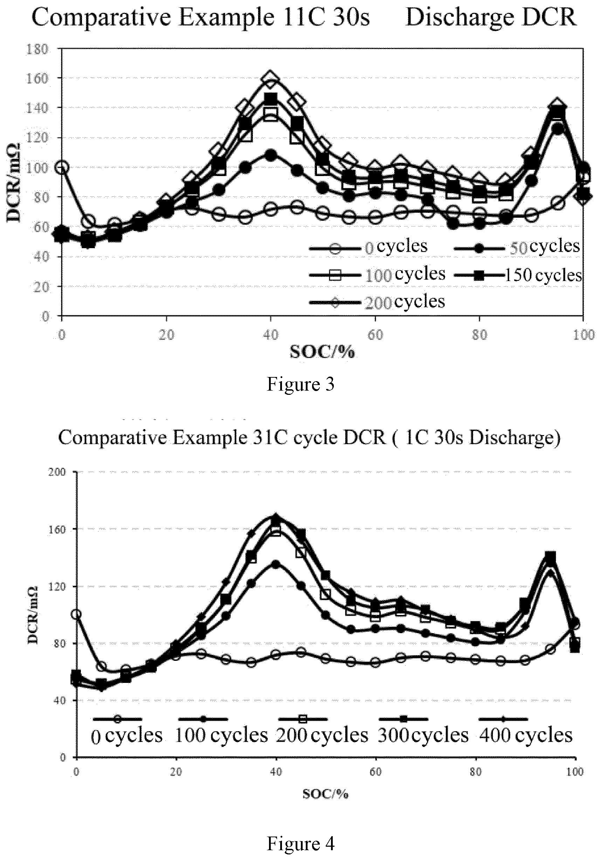

The direct current resistance of the batteries according to Application Example 1, Comparative Application Example 1, and Comparative Application Example 3 was tested at different numbers of cycles. The test results are shown in Figure 2 to Figure 4, indicating that in the present application, structure and composition of the positive electrode sheet are adjusted to facilitate the transfer of electrons from the current collector to the positive electrode active material layer and increase the migration rate of lithium-ions, thereby avoiding the disadvantages of rapid material failure and high internal resistance caused by simple mixing of the two materials.

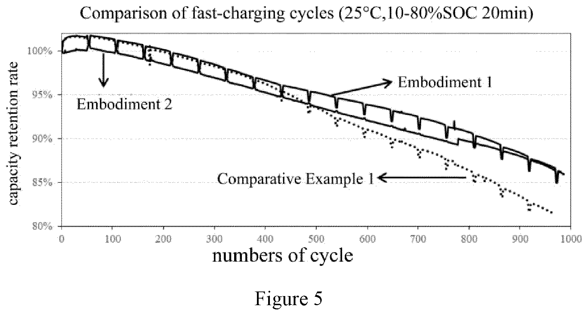

From Figure 5, it can be seen that the batteries according to Application Embodiment 1 and Application Embodiment 2 have good fast-charging cycle stability.

## Claims

1. A positive electrode sheet, comprising a positive electrode current collector, and a composite positive electrode active material layer arranged on at least one side surface of the positive electrode current collector;

   the composite positive electrode active material layer comprising a first positive electrode active material layer and a second positive electrode active material layer stacked in sequence, and the second positive electrode active material layer being arranged on a side, away from the positive electrode current collector, of the first positive electrode active material layer;
   a material of the first positive electrode active material layer comprises a positive electrode material with a layered structure, and a first conductive agent; and
   a material of the second positive electrode active material layer comprises a positive electrode material with an olivine structure, a second conductive agent, and a pore forming agent.

2. The positive electrode sheet according to claim 1, wherein the positive electrode material with a layered structure comprises a ternary positive electrode material.

3. The positive electrode sheet according to claim 2, wherein the ternary positive electrode material comprises a single-crystal ternary positive electrode material.

4. The positive electrode sheet according to any one of claims 1 to 3, wherein the first conductive agent comprises any one or a combination of at least two of carbon nanotubes, Super P, and acetylene black.

5. The positive electrode sheet according to any one of claims 1 to 4, wherein the positive electrode material with an olivine structure comprises a lithium manganese iron phosphate material;
   optionally, the lithium manganese iron phosphate material comprises a lithium manganese iron phosphate material with a core-shell structure.

6. The positive electrode sheet according to any one of claims 1 to 5, wherein the second conductive agent comprises any one or a combination of at least two of carbon nanotubes, Super P, and acetylene black.

7. The positive electrode sheet according to any one of claims 1 to 6, wherein the pore forming agent comprises vapor grown carbon fibres;
   optionally, based on a total mass of the second positive electrode active material layer being 100%, a mass fraction of the pore forming agent is 0.2% to 1.2%, optionally 0.2% to 0.5%.

8. The positive electrode sheet according to any one of claims 1 to 7, wherein a mass ratio of the positive electrode material with a layered structure to the positive electrode material with an olivine structure is 1:(1-4), optionally 1:1.5.

9. The positive electrode sheet according to any one of claims 1 to 8, wherein a mass fraction of the second conductive agent in the material of the second positive electrode active material layer is greater than a mass fraction of the first conductive agent in the material of the first positive electrode active material layer;

   optionally, the mass fraction of the first conductive agent in the material of the first positive electrode active material layer is 0.7% to 1.9%, optionally, the mass fraction of the second conductive agent in the material of the second positive electrode active material layer is 0.8% to 2.0%.

10. The positive electrode sheet according to any one of claims 1 to 9, wherein the first positive electrode active material layer can further comprise a first binder, and the second positive electrode active material layer can further comprise a second binder.

11. The positive electrode sheet according to claim 10, wherein the first binder and the second binder each comprises polyvinylidene fluoride and/or sodium carboxymethyl cellulose,

   optionally, a mass fraction of the first binder in the material of the first positive electrode active material layer is 1.5% to 2.0%;
   optionally, a mass fraction of the second binder in the material of the second positive electrode active material layer is 1.5% to 2.0%.

12. A method for preparing a positive electrode sheet according to any one of claims 1 to 11, comprising the following steps:

   providing a positive electrode current collector;
   forming a first positive electrode active material layer on at least one side surface of the positive electrode current collector; and
   forming a second positive electrode active material layer on a surface of the first positive electrode active material layer;
   wherein a material of the first positive electrode active material layer comprises a positive electrode material with a layered structure, and a first conductive agent; and a material of the second positive electrode active material layer comprises a positive electrode material with an olivine structure, a second conductive agent, and a pore forming agent.

13. The method according to claim 12, wherein forming the first positive electrode active material layer and the second positive electrode active material layer comprises double-layer coating.

14. A lithium-ion battery comprising:

   a positive electrode sheet, the positive electrode sheet being a positive electrode sheet according to any one of claims 1 to 11, or the positive electrode sheet being a positive electrode sheet prepared by the method according to claim 12 or 13;
   a negative electrode sheet; and
   a separator arranged between the positive electrode sheet and the negative electrode sheet.

15. An electronic device comprising the lithium-ion battery according to claim 14.

Figure 1

Embodiment 11C 30s          Discharge DCR

Figure 2

Comparative Example 11C 30s     Discharge DCR

Figure 3

Comparative Example 31C cycle DCR ( 1C 30s Discharge)

Figure 4

Figure 5

## INTERNATIONAL SEARCH REPORT

| | International application No. |
|---|---|
| | **PCT/CN2024/129561** |

### A. CLASSIFICATION OF SUBJECT MATTER

H01M4/131(2010.01)i

According to International Patent Classification (IPC) or to both national classification and IPC

### B. FIELDS SEARCHED

Minimum documentation searched (classification system followed by classification symbols)

CPC/IPC: H01M

Documentation searched other than minimum documentation to the extent that such documents are included in the fields searched

Electronic data base consulted during the international search (name of data base and, where practicable, search terms used)

CNTXT, WPABS, ENTXTC, DWPI, VEN, CNKI: 电池, 正极片, 活性物质, 导电剂, 造孔剂, battery, positive electrode sheet, active material, conductive agent, pore-forming agent

### C. DOCUMENTS CONSIDERED TO BE RELEVANT

| Category* | Citation of document, with indication, where appropriate, of the relevant passages | Relevant to claim No. |
|---|---|---|
| PX | CN 117766678 A (EVE ENERGY CO., LTD.) 26 March 2024 (2024-03-26)<br>claims 1-10 | 1-15 |
| X | CN 117219756 A (CHUNENG NEW ENERGY CO., LTD.) 12 December 2023 (2023-12-12)<br>description, embodiment 1 | 1-15 |
| X | CN 116960275 A (CHUNENG NEW ENERGY CO., LTD.) 27 October 2023 (2023-10-27)<br>description, embodiment 1 | 1-15 |
| A | CN 115275108 A (LISHEN (QINGDAO) NEW ENERGY CO., LTD.) 01 November 2022 (2022-11-01)<br>description, paragraphs 5-46 | 1-15 |
| A | CN 116435461 A (EVE ENERGY CO., LTD.) 14 July 2023 (2023-07-14)<br>description, embodiment 1 | 1-15 |
| A | JP 2020053390 A (TORAY INDUSTRIES, INC.) 02 April 2020 (2020-04-02)<br>description, embodiments 1-13 | 1-15 |

☑ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **10 December 2024** | **31 December 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/129561** |

| C. | DOCUMENTS CONSIDERED TO BE RELEVANT | |
| --- | --- | --- |
| Category* | Citation of document, with indication, where appropriate, of the relevant passages | Relevant to claim No. |
| A | US 2017092943 A1 (CONTEMPORARY AMPEREX TECHNOLOGY CO., LTD.) 30 March 2017 (2017-03-30)<br>     description, embodiment 17 | 1-15 |
| A | WO 2023240485 A1 (CONTEMPORARY AMPEREX TECHNOLOGY CO., LTD.) 21 December 2023 (2023-12-21)<br>     description, embodiment 1 | 1-15 |

Form PCT/ISA/210 (second sheet) (July 2022)

**INTERNATIONAL SEARCH REPORT**
Information on patent family members

International application No.

**PCT/CN2024/129561**

| Patent document cited in search report | | | Publication date (day/month/year) | Patent family member(s) | | | Publication date (day/month/year) |
|---|---|---|---|---|---|---|---|
| CN | 117766678 | A | 26 March 2024 | None | | | |
| CN | 117219756 | A | 12 December 2023 | None | | | |
| CN | 116960275 | A | 27 October 2023 | None | | | |
| CN | 115275108 | A | 01 November 2022 | None | | | |
| CN | 116435461 | A | 14 July 2023 | None | | | |
| JP | 2020053390 | A | 02 April 2020 | JP | 7371388 | B2 | 31 October 2023 |
| US | 2017092943 | A1 | 30 March 2017 | US | 10541410 | B2 | 21 January 2020 |
| | | | | JP | 2017063027 | A | 30 March 2017 |
| | | | | JP | 6392285 | B2 | 19 September 2018 |
| | | | | EP | 3147971 | A1 | 29 March 2017 |
| | | | | EP | 3147971 | B1 | 03 April 2019 |
| WO | 2023240485 | A1 | 21 December 2023 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2023118697457